# EUROPEAN PATENT SPECIFICATION

(11) **EP 3 861 088 B1**
(45) Date of publication and mention of the grant of the patent: **14.06.2023**
(21) Application number: 19787327.6
(22) Date of filing: 27.09.2019
(51) Int. Cl.: C09K 11/77, G01N 21/64

(54) **METHOD FOR DETECTING SILICA**
VERFAHREN ZUR DETEKTION VON SILICIUMDIOXID
PROCÉDÉ DE DÉTECTION DE SILICE

(30) Priority: 01.10.2018 FI 20185820
(43) Date of publication of application: 11.08.2021
(73) Proprietor: KEMIRA OYJ, 00180 Helsinki (FI)
(72) Inventor: PUUPPONEN, Salla, 02270 Espoo (FI); LAHTINEN, Sampo, 02270 Espoo (FI)
(74) Representative: Berggren Oy
(86) International application number: PCT/FI2019/050692
(87) International publication number: WO 2020/070383

(56) References cited:
- JIAN ZHANG ET AL: "Luminescent Properties of Eu(III) Chelates on Metal Nanorods", JOURNAL OF PHYSICAL CHEMISTRY C, vol. 117, no. 18, 9 May 2013 (2013-05-09), pages 9372-9380, XP055352556, US ISSN: 1932-7447, DOI: 10.1021/jp3091667
- KADIR ASLAN ET AL: "Fluorescent Core-Shell Ag@SiO 2 Nanocomposites for Metal-Enhanced Fluorescence and Single Nanoparticle Sensing Platforms", JOURNAL OF THE AMERICAN CHEMICAL SOCIETY, vol. 129, no. 6, 1 February 2007 (2007-02-01), pages 1524-1525, XP055069426, ISSN: 0002-7863, DOI: 10.1021/ja0680820
- OLGA A ZAPOROZHETS ET AL: "Solid-phase spectrophotometric and test determination of silicate in natural water", TALANTA, ELSEVIER, AMSTERDAM, NL, vol. 90, 30 December 2011 (2011-12-30), pages 85-90, XP028456768, ISSN: 0039-9140, DOI: 10.1016/J.TALANTA.2011.12.079 [retrieved on 2012-01-04]
- TOPEL SEDA DEMIREL ET AL: "Hybrid silica nanoparticles for sequestration and luminescence detection of trivalent rare-earth ions (Dy3+and Nd3+) in solution", JOURNAL OF NANOPARTICLE RESEARCH, KLUWER ACADEMIC PUBLISHERS, DORDRECHT, NL, vol. 16, no. 12, 4 December 2014 (2014-12-04), pages 1-17, XP035425143, ISSN: 1388-0764, DOI: 10.1007/S11051-014-2783-6 [retrieved on 2014-12-04]

## Description

### Field of the invention

The present invention relates to utilization of lanthanide time resolved fluorescence for measurement of silica species in water.

### Background

Silicon is naturally occurring element, existing in several forms, typically as silica, silicic acid and silicates. The general structure of silica is SiO2, whereas silicate family includes e.g. [SiO4]4- and [SiO3]2- anions. Silica or silicates polymerize also readily to oligomeric silicon-oxide compounds and further to polymeric silica depending on the water chemistry, such as silica concentration, other ions present and pH. Water soluble silica is typically mono- or oligomeric, whereas polymeric silica exists often as stable solid-liquid colloids in water. Precipitation of silica depends on numerous factors, such as pH, concentration and ion strength of the water. Silica scaling is extremely troublesome to treat due to its low solubility and strong adhesion on surfaces.

Precipitation of silica causes problems in several industries, such as in geothermal applications, cooling towers and desalination plants. Detection of soluble silica is extremely important as it enables efficient and in-time treatment of possible scaling problems.

Several methods, such as spectrometric, ion chromatography and colorimetric methods, for detecting silica have been developed. These methods, however, are often laborious and complex.

Therefore, there is still need for improved simple and effective methods for determining silica.

A method for determining silicates in water by using spectrophotometric detection of molybdates, vanadates or tungstates forming heteropoly complexes with silicates has been presented in the document Olga A. Zaporozhets et al: "Solid-phase spectrophotometric and test determination of silicate in natural water", TALANTA, ELSEVIER, AMSTERDAM, NL, vol. 90, 30 December 2011, pages 85-90.

### Summary of the Invention

An object of the present invention is to provide a method for detecting silica in sample comprising silica.

Another object of the present invention is to provide a simple and efficient method for detecting silica in sample comprising silica.

In time-resolved resolved fluorescence (TRF) method desired signal is distinguished from the interfering, short-lived fluorescence signals by temporal resolution (the fluorescence signal is recorded after a certain length lag time).

Lanthanide ions exhibit several beneficial characteristics for TRF measurements: the fluorescence lifetimes of lanthanide ions are exceptionally long and they have narrow banded emission lines and long Stokes' shift.

Alone, lanthanide ions have very low energy absorption. The absorptivity of the lanthanides can be substantially increased by chelating the trivalent lanthanide ion with energy mediating ligands. In aqueous solutions, the ligands increase the absorptivity and protect the lanthanide ion from water molecules that quench the fluorescence signal by radiationless decay process of lanthanide and OH groups of water.

The inventors surprisingly found that anionic or acidic silica groups are able to chelate lanthanide cations and increase their time resolved (TRF) signal. This signal increase is utilized for quantification of silica/silicate species in water in the method of the present invention.

It was also surprisingly found the quantification can be enhanced by addition of additional lanthanide chelation agent, such as anionic polymer. Addition of anionic polymer was found to increase substantially the TRF signal of lanthanide, such as europium. The TRF signal increase of lanthanide(III)-silica was more pronounced when polymer was introduced into the measurement than in the absence of the polymer.

Presumably, without bounding to any theory, the additional chelation agent and orthosilica / oligomeric silica species chelate trivalent lanthanide cations together. The combination of different type chelation agents enable more efficient energy transfer and particularly protect the lanthanide cation from the lanthanide-water interactions more efficiently than they do separately. Thus, even smaller concentrations of silica in a sample can be detected.

### Brief description of the figures

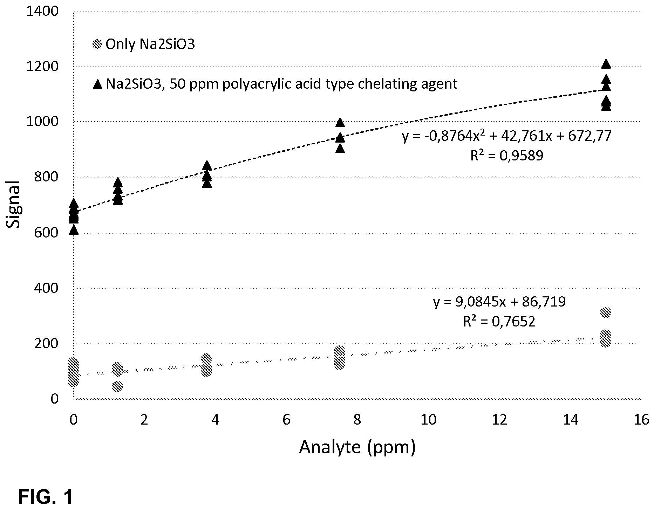

Figure 1 illustrates time-resolved fluorescence signal of Europium as a function of sodium silicate concentration with and without polyacrylic acid chelating agent.

### Detailed description

The present invention relates to a method for determining concentration of silica in a sample. More particularly the present invention relates to a method for determining concentration of silica in a sample comprising silica, the method comprising
- optionally diluting and/or purifying the sample,
- admixing the sample with a reagent comprising a lanthanide(III) ion,
- allowing the silica in the sample to interact with the reagent comprising the lanthanide(lll) ion,
- exciting the sample at a excitation wavelength and detecting a sample signal deriving from the lanthanide(III) ion at a signal wavelength by using time-resolved fluorescence measurement, and
- determining the concentration of the silica in the sample by using the detected sample signal.

In a preferred embodiment additionally a lanthanide chelating agent or chelating agents is/are admixed with the sample prior exciting the sample.

In one embodiment the reagent comprising lanthanide(III) ion and the chelating agent or agents are admixed together prior admixing with the sample.

In other embodiment the sample and the chelating agent or agents are admixed together prior admixing with the reagent comprising lanthanide(III) ion.

In other embodiment the reagent comprising lanthanide(III) ion and the sample are admixed together prior admixing with the chelating agent or agents.

The chelating agent comprises at least one or more functional groups capable of chelating lanthanide(III) ions. Preferably the one or more one functional groups are selected from esters, ethers, thiols, hydroxyls carboxylates, sulfonates, amides, phosphates, phosphonates, amines or any combination thereof.

In an embodiment, chelating agent contains additionally aromatic group or groups. The aromatic group(s) amplifies the signal of the lanthanide(III) ion.

The lanthanide(III) ion is selected from europium, terbium, samarium or dysprosium ions, preferably europium or terbium ions.

In a preferred embodiment the reagent comprises lanthanide(III) salt. The lanthanide(III) salt is selected from halogenides and oxyanions, such as nitrates, sulfates or carbonates, preferably from hydrated halogenides or nitrates, more preferably chloride.

The silica in the sample can be any suitable silica. Preferably the silica comprises silicic acid or oligomeric silicate soluble in water.

In one embodiment concentration of the silica in the measurement mixture is in the range of 0.1 - 100 ppm, preferably 0.5-50 ppm, and more preferably 1-30 ppm.

In case the concentration of the silica in the sample is higher, the sample can be diluted.

In another embodiment concentration of the lanthanide(III) ion in the measurement mixture is in the range of 0.1 - 100 µM, preferably 0.1 - 50 µM, and more preferably 1 µM - 20 µM.

In preferred embodiment concentration of the lanthanide chelating agent in the measurement mixture is in the range of .01 - 500 ppm, preferably 0.5-50 ppm, and more preferably 0.5-20 ppm.

By term "measurement mixture" is meant the admixture in the measurement.

The sample is optionally diluted to suitable aqueous solution e.g. deionized water or brine containing monovalent and/or divalent ions. Preferably, the dissolution brine does not contain any trivalent ions. Preferably the sample is an aqueous solution.

If the sample solution contains some interfering compounds such as trivalent metal cations or chelating agents that may affect TRF signal, suitable purification procedures may be applied prior to the dilution steps.

The sample is optionally purified by using a purification method selected from centrifugation, size exclusion chromatography, cleaning with solid-phase extraction (SPE) cartridges, dialysis techniques, extraction methods for removing hydrocarbons, filtration, microfiltration, ultrafiltration, nanofiltration, membrane centrifugation and any combinations thereof.

In one embodiment pH value of the sample is adjusted to a level in range between pH 3 and pH 8, preferably in range from pH 5 to pH 8

Unknown concentration of the silica in the sample is determined by comparing the sample signal to calibration curve. The calibration curve is obtained from TRF measurement of calibration standard samples with varying silica concentrations and the optional chelating agent in fixed concentration. Same dilution and/or purification steps and measurement parameters have to be used for both the sample and calibration samples.

The lanthanide(III) ion is excited at excitation wavelength and measured at emission wavelength and detected by using time-resolved fluorescence (TRF) . Any TRF reader can be employed. Excitation and emission wavelengths are selected so that the S/N is the best. Also the delay time can be optimized.

The excitation and emission wavelengths and the delay time are chosen based on the requirements of the lanthanide ion.

In an exemplary embodiment excitation wavelength and emission wavelength and delay time for Europium is 395 nm and 615 nm and 400 µs respectively.

The present invention further relates to use of the method of the present invention for determining concentration of silica in a sample.

The sample can originate from originates from geothermal processes, cooling towers, desalination plants and water treatment process.

The examples present embodiments of the present invention.

### Examples

### Example 1. Silica detection in the absence of chelating agent

All the reagents were diluted into brine, which composition is presented in Table 1. EuCl₃ ·6 H₂O was used as lanthanide source. The europium salt was diluted into brine so that the concentration of europium was 22.48 µM. Silica sample solution was prepared by diluting sodium silicate (Na₂SiO₃) into the brine. The Na₂SiO₃ concentration was varied between 0 and 30 ppm. 100 µl of both lanthanide and silica solutions were pipetted into microplate (MICROPLATE BIOCHEM 96WELL BLACK), and the TRF signal of the mixture was measured using Tecan Spark multiplate reader. The lag time, excitation and emission wavelengths used were 400 µs, 295 nm and 615 nm, respectively.

### Example 2. Silica detection in the presence of chelating agent

All the reagents were diluted into brine, which composition is presented in Table 1. EuCl₃ ·6 H₂O was used as lanthanide source. The europium salt was diluted into brine so that the concentration of europium was 22.48 µM. 200 ppm chelating agent solution was prepared by diluting the chelating agent into brine. Polyacrylic acid type polymer can be used as chelating agent. Silica sample solution was prepared by diluting sodium silicate (Na₂SiO₃) into the brine. The Na₂SiO₃ concentration was varied between 0 and 120 ppm. 100 µl of lanthanide solution was first pipetted into microplate (MICROPLATE BIOCHEM 96WELL BLACK), after which 50 µl of silica solution and 50 µl of chelating agent were added to the plate. The TRF signal of the mixture was measured using Tecan Spark multiplate reader. The lag time, excitation and emission wavelengths used were 400 µs, 295 nm and 615 nm, respectively.

Figure 1 presents the TRF signals of the measurements of Examples 1 and 2.

**Table 1. Brine composition used in tests. Salts are weighed and diluted in 10 liters of MQ water.**

| Salt | Mass (g) | |
|---|---|---|
| NaCl | 350.3 | |
| CaCl₂*2H₂O | 22.4 | |
| MgCl2*6H₂O | 14.6 | |
| KCl | 2.1 | |
| BaCl₂*2H₂O | 1.3 | |

## Claims

1. A method for determining concentration of silica in a sample comprising silica, the method comprising
- optionally diluting and/or purifying the sample,
- admixing the sample with a reagent comprising a lanthanide(III) ion,
- allowing the silica in the sample to interact with the reagent comprising the lanthanide(lll) ion,
- exciting the sample at a excitation wavelength and detecting a sample signal deriving from the lanthanide(III) ion at a signal wavelength by using time-resolved fluorescence measurement, and
- determining the concentration of the silica in the sample by using the detected sample signal.

2. Method according to claim 1, wherein additionally a lanthanide chelating agent or agents is/are admixed with the sample.

3. Method according to claim 1 or 2, wherein concentration of the silica in the measurement mixture is in the range of 0.1 - 100 ppm, preferably 0.5-50 ppm, and more preferably 1-30 ppm.

4. Method according to any of claims 1 - 3, wherein concentration of the lanthanide(III) ion in the measurement mixture is in the range of0.1 - 100 µM, preferably 0.1 - 50 µM, and more preferably 1 µM - 20 µM

5. Method according to any one of claims 2-4, wherein concentration of the lanthanide chelating agent in the measurement mixture is in the range of .01 - 500 ppm, preferably 0.5-50 ppm, and more preferably 0.5-20 ppm.

6. Method according to any one of claims 2-5, wherein the chelating agent comprises at least one or more functional groups capable of chelating lanthanide(III) ions, preferably one or more groups selected from esters, ethers, thiols, hydroxyls, carboxylates, sulfonates, amides, phosphates, phosphonates, amines or any combination thereof.

7. Method according to any one of claims 2-6, wherein the chelating agent contain additionally aromatic group or groups.

8. Method according to any of claims 1 - 7, wherein the silica comprises silicic acid or oligomeric silicate soluble in water.

9. Method according to any one of claims 1-8, wherein the lanthanide(III) ion is selected from europium, terbium, samarium or dysprosium ions, preferably europium or terbium ions.

10. Method according to any one of claims 1-9, wherein the reagent comprises lanthanide(lll) salt, preferably halogenide or oxyanion, more preferably hydrated halogenides or nitrates, most preferably chloride.

11. Method according to any of claims 1-10, wherein the sample is purified by using a purification method selected from centrifugation, size exclusion chromatography, cleaning with solid-phase extraction (SPE) cartridges, dialysis techniques, extraction methods for removing hydrocarbons, filtration, microfiltration, ultrafiltration, nanofiltration, membrane centrifugation and any combinations thereof.

12. Method according to any of claims 1 - 11, wherein a pH value of the sample is adjusted to a level in range between pH 3 and pH 8, preferably in range from pH 5 to pH 8.

13. Use of the method according to any of claims 1 - 12 for determining concentration of silica in a sample.

14. The use according to claim 13, wherein the sample originates from geothermal processes, cooling towers, desalination plants and water treatment process.

## Patentansprüche

1. Verfahren zur Bestimmung der Konzentration von Siliciumdioxid in einer Probe, die Siliciumdioxid umfasst, wobei das Verfahren umfasst:
- gegebenenfalls Verdünnen und/oder Reinigen der Probe,
- Mischen der Probe mit einem Reagens, das ein Lanthanid(III)-Ion umfasst,
- Erlauben, dass das Siliciumdioxid in der Probe mit dem Reagens, das das Lanthanid(III)-Ion umfasst, wechselwirkt,
- Anregen der Probe mit einer Anregungswellenlänge und Erfassen eines Probensignals, das von dem Lanthanid(III)-Ion stammt, mit einer Signalwellenlänge unter Verwendung von zeitaufgelöster Fluoreszenzmessung, und
- Bestimmen der Konzentration des Siliciumdioxids in der Probe unter Verwendung des erfassten Probensignals.

2. Verfahren gemäß Anspruch 1, wobei zusätzlich ein oder mehrere Lanthanid-Chelatbildner mit der Probe gemischt wird/werden.

3. Verfahren gemäß Anspruch 1 oder 2, wobei die Konzentration des Siliciumdioxids in dem Messgemisch in dem Bereich von 0,1-100 ppm, vorzugsweise 0,5-50 ppm und bevorzugter 1-30 ppm, liegt.

4. Verfahren gemäß einem der Ansprüche 1-3, wobei die Konzentration des Lanthanid(III)-Ions in dem Messgemisch in dem Bereich von 0,1-100 µM, vorzugsweise 0,1-50 µM und bevorzugter 1 µM bis 20 µM, liegt.

5. Verfahren gemäß einem der Ansprüche 2-4, wobei die Konzentration des Lanthanid-Chelatbildners in dem Messgemisch in dem Bereich von 0,01-500 ppm, vorzugsweise 0,5-50 ppm und bevorzugter 0,5-20 ppm, liegt.

6. Verfahren gemäß einem der Ansprüche 2-5, wobei der Chelatbildner wenigstens eine oder mehrere funktionelle Gruppen umfasst, die zur Chelatbildung mit Lanthanid(III)-Ionen fähig sind, vorzugsweise eine oder mehrere Gruppen ausgewählt aus Estern, Ethern, Thiolen, Hydroxygruppen, Carboxylaten, Sulfonaten, Amiden, Phosphaten, Phosphonaten, Aminen und beliebigen Kombinationen davon.

7. Verfahren gemäß einem der Ansprüche 2-6, wobei der Chelatbildner zusätzlich eine aromatische Gruppe oder aromatische Gruppen enthält.

8. Verfahren gemäß einem der Ansprüche 1-7, wobei das Siliciumdioxid Kieselsäure oder oligomeres Silicat, das in Wasser löslich ist, umfasst.

9. Verfahren gemäß einem der Ansprüche 1-8, wobei das Lanthanid(III)-Ion ausgewählt ist aus Europium-, Terbium-, Samarium- und Dysprosiumionen, vorzugsweise Europium- und Terbiumionen.

10. Verfahren gemäß einem der Ansprüche 1-9, wobei das Reagens Lanthanid(III)-Salz umfasst, vorzugsweise Halogenid- oder Oxyanion, bevorzugter hydrierte Halogenide oder Nitrate, höchst bevorzugt Chlorid.

11. Verfahren gemäß einem der Ansprüche 1-10, wobei die Probe unter Verwendung eines Reinigungsverfahrens ausgewählt aus Zentrifugation, Größenausschlusschromatographie, Reinigung mit Festphasenextraktion(SPE)-Kartuschen, Dialyseverfahren, Extraktionsverfahren zum Entfernen von Kohlenwasserstoffen, Filtration, Mikrofiltration, Ultrafiltration, Nanofiltration, Membranzentrifugation und beliebigen Kombinationen davon gereinigt wird.

12. Verfahren gemäß einem der Ansprüche 1-11, wobei ein pH-Wert der Probe auf ein Niveau in dem Bereich zwischen pH 3 und pH 8, vorzugsweise in dem Bereich von pH 5 bis pH 8, eingestellt wird.

13. Verwendung des Verfahrens gemäß einem der Ansprüche 1-12 zur Bestimmung der Konzentration von Siliciumdioxid in einer Probe.

14. Verwendung gemäß Anspruch 13, wobei die Probe aus geothermischen Verfahren, Kühltürmen, Entsalzungsanlagen oder einem Wasserbehandlungsverfahren stammt.

## Revendications

1. Procédé pour la détermination de la concentration de silice dans un échantillon comprenant de la silice, le procédé comprenant
- éventuellement la dilution et/ou la purification de l'échantillon,
- le mélange de l'échantillon avec un réactif comprenant un ion lanthanide(III),
- le fait de laisser la silice présente dans l'échantillon interagir avec le réactif comprenant l'ion lanthanide(III),
- l'excitation de l'échantillon à une longueur d'onde d'excitation et la détection d'un signal d'échantillon dérivant de l'ion lanthanide(III) à une longueur d'onde de signal à l'aide d'une mesure de fluorescence en temps résolu et
- la détermination de la concentration de la silice dans l'échantillon à l'aide du signal d'échantillon détecté.

2. Procédé selon la revendication 1, dans lequel de plus un ou des agents chélateurs de lanthanides sont mélangés avec l'échantillon.

3. Procédé selon la revendication 1 ou 2, dans lequel la concentration de la silice dans le mélange de mesure est dans la plage de 0,1-100 ppm, de préférence de 0,5-50 ppm et plus préférablement de 1-30 ppm.

4. Procédé selon l'une quelconque des revendications 1-3, dans lequel la concentration de l'ion lanthanide(III) dans le mélange de mesure est dans la plage de 0,1-100 µM, de préférence de 0,1-50 µM et plus préférablement de 1 µM-20 µM.

5. Procédé selon l'une quelconque des revendications 2-4, dans lequel la concentration de l'agent chélateur de lanthanides dans le mélange de mesure est dans la plage de 0,01-500 ppm, de préférence de 0,5-50 ppm et plus préférablement de 0,5-20 ppm.

6. Procédé selon l'une quelconque des revendications 2-5, dans lequel l'agent chélateur comprend au moins un ou plusieurs groupes fonctionnels capables de chélater des ions lanthanides(III), de préférence un ou plusieurs groupes choisis parmi des esters, des éthers, des thiols, des hydroxyles, des carboxylates, des sulfonates, des amides, des phosphates, des phosphonates, des amines ou une quelconque combinaison de ceux-ci.

7. Procédé selon l'une quelconque des revendications 2-6, dans lequel l'agent chélateur contient de plus un ou des groupes aromatiques.

8. Procédé selon l'une quelconque des revendications 1-7, dans lequel la silice comprend de l'acide silicique ou du silicate oligomère soluble dans l'eau.

9. Procédé selon l'une quelconque des revendications 1-8, dans lequel l'ion lanthanide(III) est choisi parmi les ions europium, terbium, samarium ou dysprosium, de préférence les ions europium ou terbium.

10. Procédé selon l'une quelconque des revendications 1-9, dans lequel le réactif comprend un sel de lanthanide(III), de préférence un halogénure ou oxyanion, plus préférablement des halogénures ou nitrates hydratés, le plus préférablement un chlorure.

11. Procédé selon l'une quelconque des revendications 1-10, dans lequel l'échantillon est purifié à l'aide d'un procédé de purification choisi parmi la centrifugation, la chromatographie d'exclusion stérique sur gel, l'épuration avec des cartouches d'extraction en phase solide (SPE), des techniques de dialyse, des procédés d'extraction pour l'élimination d'hydrocarbures, la filtration, la microfiltration, l'ultrafiltration, la nanofiltration, la centrifugation avec membrane et de quelconques combinaisons de ceux-ci.

12. Procédé selon l'une quelconque des revendications 1-11, dans lequel une valeur de pH de l'échantillon est ajustée à un niveau dans une plage comprise entre pH 3 et pH 8, de préférence dans une plage allant de pH 5 à pH 8.

13. Utilisation du procédé selon l'une quelconque des revendications 1-12 pour la détermination de la concentration de silice dans un échantillon.

14. Utilisation selon la revendication 13, dans laquelle l'échantillon provient de processus géothermiques, de tours de refroidissement, d'installations de dessalement et de processus de traitement d'eau.
